# EUROPEAN PATENT SPECIFICATION

(11) **EP 2 371 596 B1**
(45) Date of publication and mention of the grant of the patent: **05.12.2012**
(21) Application number: 10158120.5
(22) Date of filing: 29.03.2010
(51) Int. Cl.: B60J 7/057, H01H 23/00

(54) **Roof switch assembly**
Dachschaltereinheit
Ensemble d'interrupteur de toit

(43) Date of publication of application: 05.10.2011
(73) Proprietor: Delphi Technologies, Inc., Troy, MI 48007 (US)
(72) Inventor: Lipka, Janusz, 02-066 Warsaw (PL); Leng, Peter, 55128 Mainz (DE); Melfried, Sebastian, 30-838 Krakow (PL)
(74) Representative: Robert, Vincent

(56) References cited:
- EP-A1- 1 526 559
- EP-A2- 1 081 730
- DE-B3-102007 056 155
- US-A- 5 412 164
- US-A1- 2005 219 954

## Description

### TECHNICAL FIELD

The present invention relates to an electrical switch assembly for sliding-rising-roofs of motor vehicles, the switch assembly being provided with a counter-force device generating a counter force when actuating the switch button.

### BACKGROUND OF THE INVENTION

Switch assemblies of the aforementioned type interrupt and complete electrical circuits by moving electrical switches disposed in the housing of the switch assembly to connect fixed electrical switching devices. It is thus possible for a user to apply an auxiliary force to an actuating element to switch on and off functions associated with different electrical circuits. Often such switch assemblies switch on and off the sliding and rising roof functions of a sliding-rising-roof of a motor vehicle, as e.g. described in US 5412164.

DE 39 31 722 C2 discloses a switch assembly having a housing which receives movable electrical switching contacts. The housing has a transverse axis and a longitudinal axis. An actuating element is mounted on the housing. Each of two axle journals associated with the actuating element engage a longitudinally elongated hole provided in opposite walls of the housing in parallel with the longitudinal axis. The two axle journals are rotatable and longitudinally displaceable within the elongated holes such that the actuating element is pivotable about the transverse axis and longitudinally movable along the longitudinal axis to move between switching positions.

The actuating element includes two guide cams each spaced apart from an axle journal in parallel with the longitudinal axis. The guide cams each engage a cross-shaped connecting member provided on the opposite walls of the housing to enable the actuating element to be pivotable and longitudinally movable. The actuating element can therefore be moved to switching positions by sliding and pivoting movements which correspond to the movements of a sliding-rising-roof of a motor vehicle.

The actuating element includes switching pieces which transmit the actuating element movements to the movable switching contacts to complete electrical circuits and enable switching functions associated with the switching positions. Furthermore, the switch assembly includes a plurality of compression spring-loaded control devices which ensure that the actuating element remains in a starting position and automatically returns from a switching position to the starting position.

DE 34 15 997 C2 discloses a switch assembly wherein movements of the actuating element correspond to the movements of a sliding-rising-roof of a motor vehicle. The actuating element also includes two axle journals which are rotatable and longitudinally movable within elongated holes provided in opposite walls of the housing. The actuating element further includes two guide cams which pivotable and longitudinally displaceable engage a respective cross-shaped connecting member of the housing.

EP0778980 and US6046414 disclose other examples of this type of switch assembly.

A problems associated with the existing solutions of the switch assembly are, primarily that the assemblies include a considerable number of individual parts complicated to assemble, secondly the packaging required for the assembly is large while the available space in modem cars diminishes and thirdly, because of the internal arrangement of the components, the return force provided to the user manipulating the actuating element varies according to the direction where the actuating element is moved.

This complexity in design results is increased time to manufacture and assemble and increased overall cost.

It is important to propose to the market a switch assembly solving the afore mentioned problems in term of simplification of the design while requiring a smaller volume and providing to the user an equivalent return feeling in all directions.

### SUMMARY OF THE INVENTION

Accordingly, it is an object of the present invention to provide a switch assembly for a sliding-rising-roof of a motor vehicle which maintains a high degree of functionality, which has a compact design, and which consists of exceptionally few individual parts which are convenient to assemble.

In carrying out the above object and other objects, features, and advantages, the present invention provides a switch assembly according to the preamble of claim 1.

The switch assembly as per the invention comprises a housing, an actuating member mounted on the housing and a plurality of electrical switching members. The actuating member is able, with regards to the housing, to translate frontward and backward along a longitudinal axis and to pivot upward and downward about a transverse axis thus cooperating with the electrical switching members to control the roof displacements.

The switch assembly further comprises two sliders solely able to translate along the longitudinal axis. The sliders are driven by the actuating member and are cooperating with the switching members in order to generate a switching function controlling the roof displacements. The switching function is derived from the positions of the switching members actuated by both sliders.

Additional features of the switch assembly are in the dependant claims.

More specifically, the translation of the actuating member drives both sliders along the same longitudinal direction so that there is no relative displacement between the sliders and, the pivoting of the actuating member drives the second slider in the longitudinal direction while the first slider standstill so there is a relative displacement between the sliders. The first slider is mounted inside the housing and is longitudinally guided by the housing and, the second slider is mounted into the first slider and is longitudinally guided by the first slider.

The switch assembly further comprises at least one counterforce device providing a counter-force to the user moving the actuating member, the counter-force device comprising an elastically deformable portion providing a force feedback when deformed by the displacements of the slider. In absence of action from a user the actuating member standstill in a neutral position. The neutral position is determined by the counter-force device.

In a preferred embodiment, the switch assembly comprises four counter-force devices each one being associated with a distinct displacement of the actuating member.

The housing has substantially the shape of a parallelepiped rectangle provided with a front transversal wall and a back transversal wall longitudinally apart from each other. The first slider is mounted inside the housing between the front and back walls of the housing and is itself provided with a front transversal wall and a back transversal wall longitudinally apart from each other. The second slider is mounted onto the first slider between the front and back walls of the first slider and is itself provided with a front transversal wall and a back transversal wall longitudinally apart from each other. The first counter force device is mounted between the front wall of the housing and the front wall of the first slider and provides counter force to the frontward translation of the actuating member. The second counter force device is mounted between the back wall of the housing and the back wall of the first slider and provides counter force to the backward translation of the actuating member. The third counter force device is mounted between the front wall of the first slider and the front wall of the second slider and provides counter force to the downward, respectively upward, pivoting of the actuating member. The fourth counter force device is mounted between the back wall of the first slider and the back wall of the second slider and provides counter force to the upward, respectively downward, pivoting of the actuating member.

All four counter-force devices are identical and all four counter-force devices are substantially operating in a single plane that is parallel to the plane of the longitudinal and of the transverse axis.

The switch assembly is further provided with a guiding device for the actuating member forbidding any combination of translation and pivoting of the actuating member.

The switch assembly as per the present invention provides the advantages that the user receives identical force feedback whatever the directions he actuates the switch.

Also, the use of identical counter force devices ensures a stable neutral position of the button which is easy to define thanks to a symmetrical architecture of the switch assembly. No additional elements such as plunger are needed.

Furthermore, the guiding and actuating of the components is designed to be simple therefore requiring manufacturing tolerances easier to achieve.

### BRIEF DESCRIPTION OF THE DRAWINGS

The present invention is now described by way of example with reference to the accompanying drawings in which:
Figure 1 is a general view of the interior of a vehicle identifying the position where is commonly placed a roof switch assembly.
Figure 2 is a cut of a 3D view of the switch assembly as per the present invention, the switch being in a neutral position.
Figure 3 is a cross-section view of the switch assembly of figure 2 in the plane X-Z, the actuating member being frontwardly translated.
Figure 4 is a cross-section view of the switch assembly of figure 2 in the plane X-Z as in Figure 3, the actuating member being downwardly pivoted.
Figure 5 is a side view of the guiding device of the actuating member of figure 3, the actuating member being frontwardly translated.
Figure 6 is a side view of the guiding device of the actuating member as shown in Figure 5, the actuating member being upwardly pivoted.

### DESCRIPTION OF THE PREFERRED EMBODIMENTS

In the following description, similar elements could be designated with the same reference numbers.

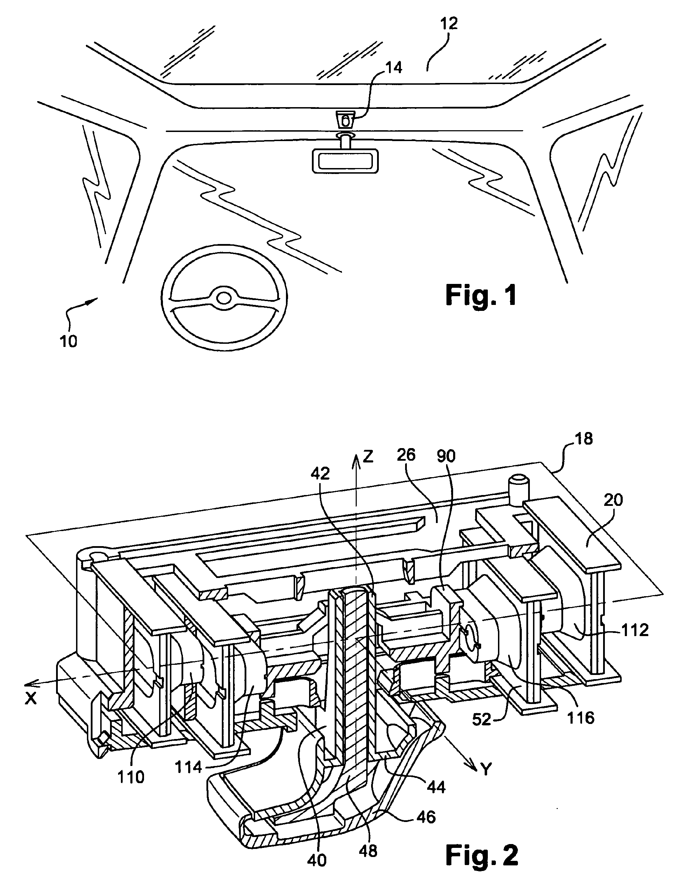

In a motor vehicle 10, Figure 1 sketches the environment and usual location of a switch 14 for operating a sliding-rising-roof 12. The switch assembly 14 is placed above the driver.

As presented in Figure 2, the switch assembly 14 is fixed on a printed circuit board 18 substantially horizontally embedded in the fixed portion of the roof of the vehicle 10. The switch assembly 14 is spotted in a tridimensional axial system comprising a longitudinal axis X substantially horizontal and defining a frontward direction and a backward direction, a transverse axis Y substantially horizontal and orthogonal to the longitudinal axis X and the vertical axis Z defining an upward direction and a downward direction.

Figures 2 to 6 detail a preferred embodiment of the switch assembly 14 which comprises a housing 20 shaped as a parallelepiped rectangle closed on five sides being four lateral planar vertical walls 22, 24, 26, 28 and a horizontal bottom-cover 30. The sixth side, which is open, is against the printed circuit board 18 that is substantially horizontal. The four walls are a front transversal wall 22 and a back transversal wall 24 distant from each other along the longitudinal axis X, a right longitudinal wall 26 and a left longitudinal wall 28 distant from each other along the transverse axis Y. The bottom-cover 30 is adjusted and attached to the housing 20. Once on the printed circuit board 18, the housing 20 is closed on all six sides and defines an inside volume 32.

The bottom-cover 30 is provided with a substantially rectangular opening 34 centrally placed in the bottom-cover 30. Other shapes of the opening 34 are of course possible.

The switch assembly 14 further comprises an actuating member 40 extending from an upper end 42 to a lower end 44. In place in the switch assembly 14, the actuating member 40 extends through the rectangular opening 34 of the bottom-cover 30, the upper end 42 being inside the housing 20 close to the printed circuit board 18, and the lower end 44 being outside the housing 20, accessible to a user.

A button-cap 46 is adjusted and fixed onto the lower end 44 providing to the user an ergonomic interface to move the actuating member 40.

The actuating member 40 may be hollow as represented on Figure 2 or plain. In the hollow embodiment a light guide 48 is placed in the actuating member 40 and the button-cap 46 is holed so that a light emitted by a light source (not represented) placed on the printed circuit board 18 is directed downward illuminating the button-cap 46 thus making it more visible to the user.

Inside the housing 20 is placed a first slider 52 that comprises a rectangular floor 54, a front transversal wall 56 and a back transversal wall 58. The rectangular floor 54 is shorter in length than the housing 20 and fitted in width to the housing 20. At both extremities of the length of the rectangular floor 54 upwardly extend the front wall 56 and the back wall 58. The front wall 56 of the first slider 52 faces the front wall 22 of the housing 20 and, the back wall 58 of the first slider 52 faces the back wall 24 of the housing 20.

Furthermore, a guiding mean (not represented) of the first slider 52 relative to the housing 20 forbids any other displacement than a longitudinal translation along the longitudinal axis X.

The rectangular floor 54 of the first slider 52 is provided with an opening 68 through which extends the actuating member 40. The actuating member 40 is pivotally mounted about a transverse pivot axis AP that is parallel to the transverse axis Y. A pivoting mean 70 comprises two transversally aligned pivoting holes 72, 74 operated in two downward extensions 76, 78 of the first slider 52. The two extensions 76, 78 extend through the rectangular opening 34 operated in the housing 20 and, between them, extends the actuating member 40. Two male pins 80, 82 transversally extending from the actuating member 40 cooperate with the pivoting holes 72, 74 thus forming the pivot axis AP about which pivots the actuating member 40 relative to the first slider 52.

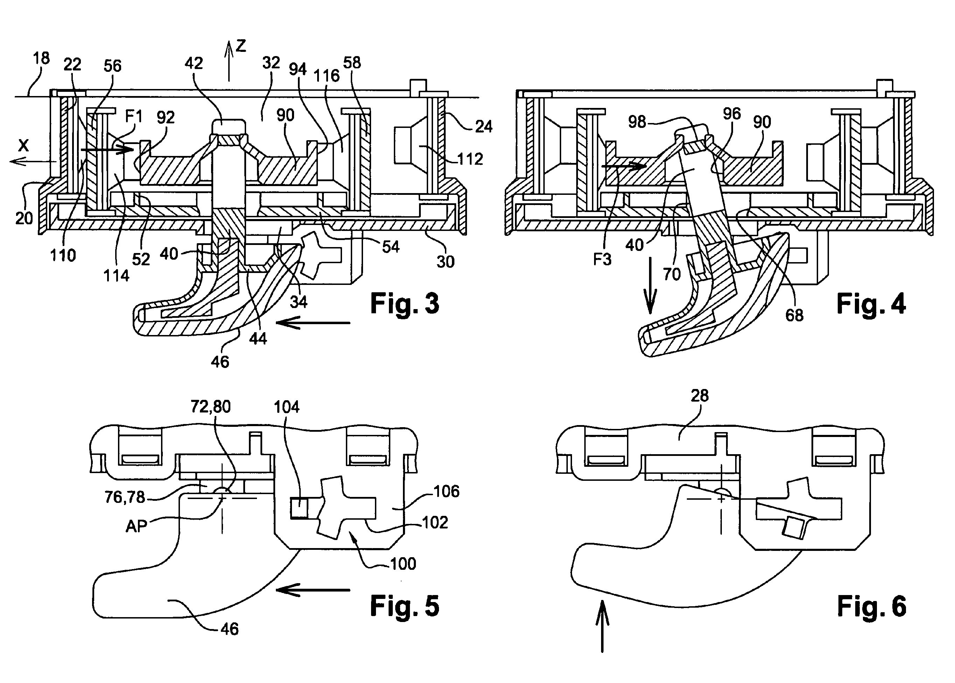

In the rectangular floor 54 of the first slider 52, the opening 68 is sufficient in dimension so the rectangular floor 54 does not interfere with the actuating member 40. As represented on Figure 3 and 4, the opening 68 may have a downwardly oriented V-shape, the angle of the V matching the pivoting angle of the actuating member 40.

In the first slider 52 is placed a second slider 90 shaped as a parallelepiped rectangle shorter in length than the first slider 52 and fitted in width to the first slider 52, the four vertically extending sides of the parallelepiped rectangle being a left and a right longitudinal walls and a front 92 and a back 94 transversal walls. Once in place the front wall 92 and the back wall 94 of the second slider 90 respectively face the front wall 56 and a back wall 58 of the first slider 52.

In place, the second slider 90 is able to translate inside the first slider 52 along the longitudinal axis X. A guiding mean (not represented) of the second slider 90 relative to the first slider 52 forbids any other displacement than a longitudinal translation of the second slider 90.

The second slider 90 is further provided with a centrally placed vertical opening 96 which cooperates with the upper end 42 of the actuating member 40 creating a sliding-pivot knuckle 98 (Figures 3 and 4). Thus, an upward pivoting of the actuating member 40 is transformed into a backward translation of the second slider 90 and, reversely, a downward pivoting of the actuating member 40 (Figure 4) is transformed into a frontward translation of the second slider 90. Such a sliding-pivot knuckle 98 is easily created with, for instance, a cylindrical vertical opening and a spherically shaped up-extremity.

As presented on Figure 5 and 6, the actuating member 40 can move relative to the housing 20 and is guided in its movements by a guiding mean 100 comprising a guiding path 102 and a guiding pin 104 that follows the path 102. The guiding path 102 is operated in a downward extension 106 of a longitudinal wall 26, 28 of the housing 20. The guiding path 102 has the shape of a cross straightly extending along the longitudinal axis X and curvedly extending substantially along the vertical axis Z, the curve being centered on the pivot axis AP when the guiding pin 104 is in the middle of the cross-shaped guiding path 102. The guiding pin 104 transversally extending from the button-cap 46 enters the guiding path 102 and follows it, so that the displacement of the actuating member 40 relative to the housing 20 are limited to a frontward-backward translation and to the upward-downward pivoting and, the guiding mean 100 forbids any combination of the translation with a pivoting. The center of the cross shaped guiding path 102 defines a neutral position PN for the switch assembly 14.

Furthermore a first deformable plastic dome 110 is placed between the front wall 22 of the housing 20 and the front wall 56 of the first slider 52. A second deformable plastic dome 112 is placed between the back wall 24 of the housing 20 and the back wall 58 of the first slider 52. A third deformable plastic dome 114 is placed between the front wall 22 of the first slider 52 and the front wall 92 of the second slider 90. A fourth deformable plastic dome 116 is placed between the back wall 24 of the first slider 52 and the back wall 94 of the second slider 90. Each deformable plastic dome generates a force when it is compressed, thus providing a counterforce to the displacement of a slider 52, 90. The counter forces are felt by the user manipulating the actuating member 40.

In a preferred embodiment the deformable plastic dome are identical and are placed substantially in a common plane that is horizontal. Such an arrangement provided to the user counter forces with equal intensity.

Alternative choices are possible both in shapes of the devices providing the counterforce than in force generated.

The above described embodiment of the switch assembly 14 can be manipulated so its actuating member 40 can either be displaced in one of the four directions, front back up or down, or can be left untouched. The sliders 52, 90, can consequently be in five different operating mode here after detailed.

Operating mode 1: The frontward translation of the actuating member 40 (figure 2, 3 and 5) frontwardly translates both the first slider 52 and the second slider 90 so that the front wall 56 of the first slider 52 gets closer to the front wall 22 of the housing 20 while the second slider 90 remains centered in the first slider 52. Only the first dome 110 is compressed generating a backwardly oriented counterforce F1 to the frontward translation of the actuating member 40.

Operating mode 2: The backward translation of the actuating member 40 backwardly translates both the first slider 52 and the second slider 90 so that the back wall 58 of the first slider 52 gets closer to the back wall 24 of the housing 20 while the second slider 90 remains centered relative to the first slider 52. Only the second dome 112 is compressed generating a frontwardly oriented counterforce F2 to the backward translation of the actuating member 40.

Operating mode 3: The downward pivoting of the actuating member 40 (Figure 4) frontwardly translates the second slider 90 while the first slider 52 standstill centered relative to the housing 20. The front wall 92 of the second slider 90 gets closer to the front wall 22 of the first slider 52. Only the third dome 114 is compressed generating a backwardly oriented counterforce F3 to the downward pivoting of the actuating member 40.

Operating mode 4: The upward pivoting of the actuating member 40 backwardly translates the second slider 90 while the first slider standstill centered relative to the housing 20. The back wall 94 of the second slider 90 gets closer to the back wall 24 of the first slider 52. Only the fourth dome 116 is compressed generating a frontwardly oriented counterforce F4 to the upward pivoting of the actuating member 40.

Operating mode 5 "Neutral": Left untouched the actuating member 40 is positioned so the first slider 52 is centered in the housing 20 and the second slider 90 is centered relative to the first slider 52. This is achieved thanks to the four deformable plastic domes 110, 112, 114, 116 which are in contact with the walls between which they are mounted.

The deformable plastic domes 110, 112, 114, 116 act as compression spring. An alternative to the plastic dome is any kind of elastically deformable feature providing a return force, such as a flexible blade spring or a coil spring,

As an alternative easy to create, for instance by inverting the orientation of the button cap 46 relative to the pivot axis AP of the actuating member 40, the upward pivoting of the actuating member 40 could generate a frontward translation of the second slider 90 and reversely a downward pivoting would generate a backward translation.

Upwardly extending from the first slider 52 is a first switching member (not represented) that cooperates with a matching element placed on the printed circuit board 18 in order to generate first switching information.

Similarly, upwardly extending from the second slider 90 is a second switching member (not represented) that cooperates with a matching element placed on the circuit board 18 in order to generate second switching information.

The electrical switching members cooperating with their matching element can be of any type such as contact blades, Hall Effect sensors, light barrier or other.

The above paragraph describes one switching element per slider. Sliders provided with a plurality of switching elements are a possible alternative.

## Claims

1. Switch assembly (14), more especially for the lift-and-slide roof (12) of a vehicle (10), comprising a housing (20), an actuating member (40) mounted on the housing (20) and a plurality of electrical switching members, the actuating member (40) being able, with regards to the housing (20), to translate frontward and backward along a longitudinal axis (X) and to pivot upward and downward about a transverse axis (AP) thus cooperating with the electrical switching members to control the roof displacements,
**characterized in that**
the switch assembly (14) further comprises two sliders (52, 90) solely able to translate along the longitudinal axis (X), said sliders (52, 90) being driven by the actuating member (40) and cooperating with the switching members in order to generate a switching function controlling the roof (12) displacements, the switching function being derived from the positions of the switching members actuated by both sliders (52, 90).

2. Switch assembly (14) as set in claim 1 wherein the translation of the actuating member (40) drives both sliders (52, 90) along the same longitudinal direction (X) so that there is no relative displacement between the sliders (52, 90) and, the pivoting of the actuating member (40) drives the second slider (90) in the longitudinal direction (X) while the first slider (52) standstill so there is a relative displacement between the sliders (52, 90).

3. Switch assembly (14) as set in any of the preceding claim wherein the first slider (52) is mounted inside the housing (20) and is longitudinally guided by the housing (20) and, the second slider (90) is mounted into the first slider (52) and is longitudinally guided by the first slider (52).

4. Switch assembly (14), as set in any of the preceding claim, wherein the switch assembly (14) further comprises at least one counterforce device (110, 112, 114, 116) providing a counter-force to the user moving the actuating member (40).

5. Switch assembly (14) as set in claim 4, wherein the counter-force device (110, 112, 114, 116) comprises an elastically deformable portion providing a force feedback when deformed by slider (52, 90) displacements.

6. Switch assembly (14) as set in any of the claims 4 or 5 where, in absence of action from a user, the actuating member (40) standstill in a neutral position (PN) determined by the counter-force device (110, 112, 114, 116).

7. Switch assembly (14) as set in any of the claims 4 to 6 wherein the switch assembly (14) further comprises four counter-force devices (110, 112, 114, 116) each one being associated with a distinct displacement of the actuating member (40).

8. Switch assembly (14) as set in claim 7 wherein
the housing (20) has substantially the shape of a parallelepiped rectangle provided with a front transversal wall (22) and a back transversal wall (24) longitudinally apart from each other;
the first slider (52) is mounted inside the housing (20) between the front and back walls (22, 24) of the housing (20) and is itself provided with a front transversal wall (56) and a back transversal wall (58) longitudinally apart from each other;
the second slider (90) is mounted onto the first slider (52) between the front and back walls (56, 58) of the first slider (52) and is itself provided with a front transversal wall (92) and a back transversal wall (94) longitudinally apart from each other;
the first counter force device (110) is mounted between the front wall (22) of the housing (20) and the front wall (56) of the first slider (52) and provides counter force to the frontward translation of the actuating member (40);
the second counter force device (112) is mounted between the back wall (24) of the housing (20) and the back wall (58) of the first slider (52) and provides counter force to the backward translation of the actuating member (40);
the third counter force device (114) is mounted between the front wall (56) of the first slider (52) and the front wall (92) of the second slider (90) and provides counter force to the downward, respectively upward, pivoting of the actuating member (40);
and the fourth counter force device (116) is mounted between the back wall (58) of the first slider (52) and the back wall (94) of the second slider (90) and provides counter force to the upward, respectively downward, pivoting of the actuating member (40).

9. Switch assembly (14) as set in any of the claims 7 or 8 wherein all four counter-force devices (110, 112, 114, 116) are identical.

10. Switch assembly (14) as set in claim 7 or 9 wherein all four counter-force devices (110, 112, 114, 116) are substantially operating in a single plane that is parallel to the plane of the longitudinal (X) and of the transverse axis (Y).

11. Switch assembly (14) as set in any of the preceding claims wherein the switch assembly (14) is further provided with a guiding device for the actuating member (40) forbidding any combination of translation and pivoting of the actuating member (40).

## Patentansprüche

1. Schalterbaugruppe (14), insbesondere für das Hebe-Schiebe-Dach (12) eines Fahrzeugs (10), die ein Gehäuse (20), ein Betätigungselement (40), das an dem Gehäuse (20) angebracht ist, und eine Vielzahl von elektrischen Schaltelementen aufweist, wobei sich das Betätigungselement (40), in Bezug auf das Gehäuse (20), vorwärts und rückwärts entlang einer Längsachse (X) bewegen kann und nach oben und unten um eine Querachse (AP) schwenken kann, um so mit den elektrischen Schaltelementen zusammenzuarbeiten, um die Dach-Bewegungen zu steuern,
**dadurch gekennzeichnet, dass**
die Schalterbaugruppe (14) weiter zwei Schieber (52, 90) aufweist, die ausschließlich fähig sind, sich entlang der Längsachse (X) zu bewegen, wobei die Schieber (52, 90) durch das Betätigungselement (40) betätigt werden und mit den Schaltelementen zusammenarbeiten, um eine Schaltfunktion zu erzeugen zum Steuern der Bewegungen des Daches (12), wobei die Schaltfunktion aus den Positionen der Schaltelemente abgeleitet wird, die von beiden Schiebern (52, 90) betätigt werden.

2. Schalterbaugruppe (14) gemäß Anspruch 1, wobei die Bewegung des Betätigungselements (40) beide Schieber (52, 90) entlang der selben Längsrichtung (X) betätigt, so dass es keinen relativen Versatz zwischen den Schiebern (52, 90) gibt, und wobei das Schwenken des Betätigungselements (40) den zweiten Schieber (90) in der Längsrichtung (X) betätigt, während der erste Schieber (52) still steht, so dass es einen relativen Versatz zwischen den Schiebern (52, 90) gibt.

3. Schalterbaugruppe (14) gemäß einem der vorhergehenden Ansprüche, wobei der erste Schieber (52) innerhalb des Gehäuses (20) angebracht ist und in Längsrichtung durch das Gehäuse (20) geführt wird und der zweite Schieber (90) in dem ersten Schieber (52) angebracht ist und in Längsrichtung durch den ersten Schieber (52) geführt wird.

4. Schalterbaugruppe (14) gemäß einem der vorhergehenden Ansprüche, wobei die Schalterbaugruppe (14) weiter zumindest eine Gegenkraft-Vorrichtung (110, 112, 114, 116) aufweist, die eine Gegenkraft für den Benutzer vorsieht, der das Betätigungselement (40) bewegt.

5. Schalterbaugruppe (14) gemäß Anspruch 4, wobei die Gegenkraft-Vorrichtung (110, 112, 114, 116) einen elastisch verformbaren Teil aufweist, der bei einer Verformung durch Bewegungen der Schieber (52, 90) eine Kraftrückmeldung vorsieht.

6. Schalterbaugruppe (14) gemäß einem der Ansprüche 4 oder 5, wobei, bei Abwesenheit einer Aktion von einem Benutzer, das Betätigungselement (40) in einer Neutralposition (PN) still steht, die durch die Gegenkraft-Vorrichtung (110, 112 , 114, 116) bestimmt wird.

7. Schalterbaugruppe (14) gemäß einem der Ansprüche 4 bis 6, wobei die Schalterbaugruppe (14) weiter vier Gegenkraft-Vorrichtungen (110, 112, 114, 116) aufweist, die jeweils mit einer eindeutigen Bewegung des Betätigungselements (40) assoziiert sind.

8. Schalterbaugruppe (14) gemäß Anspruch 7, wobei
das Gehäuse (20) im Wesentlichen die Form eines Parallelepiped-Rechtecks hat, das mit einer vorderen Querwand (22) und einer hinteren Querwand (24) vorgesehen ist, die in Längsrichtung voneinander beabstandet sind;
der erste Schieber (52) innerhalb des Gehäuses (20) zwischen den Vorder- und Rückwänden (22, 24) des Gehäuses (20) angebracht ist und selbst mit einer vorderen Querwand (56) und einer hinteren Querwand (58) vorgesehen ist, die in Längsrichtung voneinander beabstandet sind;
der zweite Schieber (90) auf dem ersten Schieber (52) zwischen den Vorder- und Rückwänden (56, 58) des ersten Schiebers (52) angebracht ist und selbst mit einer vorderen Querwand (92) und einer hinteren Querwand (94) vorgesehen ist, die in Längsrichtung voneinander beabstandet sind;
die erste Gegenkraft-Vorrichtung (110) zwischen der Vorderwand (22) des Gehäuses (20) und der Vorderwand (56) des ersten Schiebers (52) angebracht ist und eine Gegenkraft zu der Vorwärts-Bewegung des Betätigungselements (40) vorsieht;
die zweite Gegenkraft-Vorrichtung (112) zwischen der Rückwand (24) des Gehäuses (20) und der Rückwand (58) des ersten Schiebers (52) angebracht ist und eine Gegenkraft zu der Rückwärts-Bewegung des Betätigungselements (40) vorsieht;
die dritte Gegenkraft-Vorrichtung (114) zwischen der Vorderwand (56) des ersten Schiebers (52) und der Vorderwand (92) des zweiten Schiebers (90) angebracht ist und eine Gegenkraft zu dem Schwenken des Betätigungselements (40) nach unten beziehungswiese nach oben vorsieht;
und die vierte Gegenkraft-Vorrichtung (116) zwischen der Rückwand (58) des ersten Schiebers (52) und der Rückwand (94) des zweiten Schiebers (90) angebracht ist und eine Gegenkraft zu dem Schwenken des Betätigungselements (40) nach unten beziehungswiese nach oben vorsieht.

9. Schalterbaugruppe (14) gemäß einem der Ansprüche 7 oder 8, wobei alle vier Gegenkraft-Vorrichtungen (110, 112, 114, 116) identisch sind.

10. Schalterbaugruppe (14) gemäß Anspruch 7 oder 9, wobei alle vier Gegenkraft-Vorrichtungen (110, 112, 114, 116) im Wesentlichen in einer einzigen Ebene arbeiten, die parallel zu der Ebene der Längsachse (X) und der Querachse (Y) ist.

11. Schalterbaugruppe (14) gemäß einem der vorhergehenden Ansprüche, wobei die Schalterbaugruppe (14) weiter mit einer Führungsvorrichtung für das Betätigungselement (40) vorgesehen ist, die jede Kombination aus einer translatorischen Bewegung und einem Schwenken des Betätigungselements (40) unterbindet.

## Revendications

1. Ensemble commutateur (14), plus spécialement pour le toit ouvrant-coulissant (12) d'un véhicule (10), comprenant un boîtier (20), un élément d'actionnement (40) monté sur le boîtier (20) et une pluralité d'éléments de commutation électrique, l'élément d'actionnement (40) étant capable, par rapport au boîtier (20), d'effectuer une translation vers l'avant et vers l'arrière le long d'un axe longitudinal (X), et de pivoter vers le haut et vers le bas autour d'un axe transversal (AP), en coopérant ainsi avec les éléments de commutation électrique pour commander les déplacements du toit,
**caractérisé en ce que**
l'ensemble commutateur (14) comprend encore deux coulisseaux (52, 90) uniquement capables de translation le long de l'axe longitudinal (X), lesdits coulisseaux (52, 90) étant entraînés par l'élément d'actionnement (40) et coopérant avec les éléments de commutation afin d'engendrer une fonction de commutation qui commande les déplacements du toit (12), la fonction de commutation étant dérivée des positions des éléments de commutation actionnés par les deux coulisseaux (52, 90).

2. Ensemble commutateur (14) selon la revendication 1, dans lequel la translation de l'élément d'actionnement (40) entraîne les deux coulisseaux (52, 90) le long de la même direction longitudinale (X) de sorte qu'il n'y a pas de déplacement relatif entre les coulisseaux (52, 90), et le pivotement de l'élément d'actionnement (40) entraîne le second coulisseau (90) dans la direction longitudinale (X) alors que le premier coulisseau (52) reste stationnaire, de sorte qu'il y a un déplacement relatif entre les coulisseaux (52, 90).

3. Ensemble commutateur (14) selon l'une quelconque des revendications précédentes, dans lequel le premier coulisseau (52) est monté à l'intérieur du boîtier (20) et est guidé longitudinalement par le boîtier (20), et le second coulisseau (90) est monté dans le premier coulisseau (52) et est guidé longitudinalement par le premier coulisseau (52).

4. Ensemble commutateur (14) selon l'une quelconque des revendications précédentes, dans lequel l'ensemble commutateur (14) comprend encore au moins un dispositif à force contraire (110, 112, 114, 116) fournissant une force contraire à l'utilisateur qui déplace l'élément d'actionnement (40).

5. Ensemble commutateur (14) selon la revendication 4, dans lequel le dispositif à force contraire (110, 112, 114, 116) comprend une portion élastiquement déformable fournissant une force de rétroaction quand elle est déformée par les déplacements des coulisseaux (52, 90).

6. Ensemble commutateur (14) selon l'une quelconque des revendications 4 ou 5, dans lequel, en l'absence d'une action de la part d'un utilisateur, l'élément d'actionnement (40) reste stationnaire dans une position neutre (PN) déterminée par le dispositif à force contraire (110, 112, 114, 116).

7. Ensemble commutateur (14) selon l'une quelconque des revendications 4 à 6, dans lequel l'ensemble commutateur (14) comprend en outre quatre dispositifs à force contraire (110, 112, 114, 116), chacun d'eux étant associé à un déplacement distinct de l'élément d'actionnement (40).

8. Ensemble commutateur (14) selon la revendication 7, dans lequel le boîtier (20) a sensiblement la forme d'un parallélépipède à base rectangulaire doté d'une paroi transversale avant (22) et d'une paroi transversale arrière (24) écartées longitudinalement l'une de l'autre ;
le premier coulisseau (52) est monté à l'intérieur du boîtier (20) entre la paroi avant et la paroi arrière (22, 24) du boîtier (20) et est doté lui-même d'une paroi transversale avant (56) et d'une paroi transversale arrière (58) écartées longitudinalement l'une de l'autre ;
le second coulisseau (90) est monté sur le premier coulisseau (52) entre la paroi avant et la paroi arrière (56, 58) du premier coulisseau (52) et est lui-même doté d'une paroi transversale avant (92) et d'une paroi transversale arrière (94) écartées longitudinalement l'une de l'autre ;
le premier dispositif à force contraire (110) est monté entre la paroi avant (22) du boîtier (20) et la paroi avant (56) du premier coulisseau (52) et applique une force contraire à la translation de l'élément d'actionnement (40) vers l'avant ;
le second dispositif à force contraire (112) est monté entre la paroi arrière (24) du boîtier (20) et la paroi arrière (58) du premier coulisseau (52) et applique une force contraire à la translation de l'élément d'actionnement (40) vers l'arrière ;
le troisième dispositif à force contraire (114) est monté entre la paroi avant (56) du premier coulisseau (52) et la paroi avant (92) du second coulisseau (90) et applique une force contraire au pivotement vers le bas ou respectivement vers le haut de l'élément d'actionnement (40) ;
et le quatrième dispositif à force contraire (116) est monté entre la paroi arrière (58) du premier coulisseau (52) et la paroi arrière (94) du second coulisseau (90) et applique une force contraire au pivotement vers le haut ou respectivement vers le bas de l'élément d'actionnement (40).

9. Ensemble commutateur (14) selon l'une quelconque des revendications 7 ou 8, dans lequel tous les quatre dispositifs à force contraire (110, 112, 14, 116) sont identiques.

10. Ensemble commutateur (14) selon la revendication 7 ou 9, dans lequel tous les quatre dispositifs à force contraire (110, 112, 114, 116) fonctionnent sensiblement dans un plan unique qui est parallèle au plan de l'axe longitudinal (X) et de l'axe transversal (Y).

11. Ensemble commutateur (14) selon l'une quelconque des revendications précédentes, dans lequel l'ensemble commutateur (14) est encore doté d'un dispositif de guidage pour l'élément d'actionnement (40), interdisant toute combinaison de translation et de pivotement de l'élément d'actionnement (40).
